# EUROPÄISCHE PATENTANMELDUNG

(11) **EP 2 450 176 A1**
(43) Veröffentlichungstag der Anmeldung: **09.05.2012**
(21) Anmeldenummer: 10189916.9
(22) Anmeldetag: 04.11.2010
(51) Int. Cl.: B29C 65/34, F16L 47/03

(54) **Heizwendelschweissfitting**

(71) Anmelder: Georg Fischer Rohrleitungssysteme AG, 8201 Schaffhausen (CH)
(72) Erfinder: Wermelinger, Jörg, 8200, Schaffhausen (CH)
(74) Vertreter: De Colle, Piergiacomo

(57) **Zusammenfassung**

Heizwendelschweissfitting (1) mit einem zylinderförmigen Kupplungskörper (2) zum Verschweissen von Rohrleitungen aus thermoplastischen oder anderen schweissbaren Kunststoffen, enthaltend mindestens zwei Heizdrahtwicklungen (3) mit jeweils mehreren Windungen die einen beliebigen Abstand zueinander aufweisen sowie Kontakte (12) zur Zuführung des elektrischen Stroms, wobei die Heizdrahtwicklung wellenförmig vorzugsweise sinusförmig verläuft und die Kupplung dadurch verformbar ist.

## Beschreibung

Die Erfindung betrifft Heizwendelschweissfittings mit einem zylinderförmigen Kupplungskörper zum Verschweissen von Rohrleitungen aus thermoplastischen oder anderen schweissbaren Kunststoffen, enthaltend mindestens zwei Heizdrahtwicklungen mit jeweils mehreren Windungen die einen beliebigen Abstand zueinander aufweisen sowie Kontakte zur Zuführung des elektrischen Stroms.

Hauptsächlich in den letzten Jahren werden aus Gewichts- und Korrosionsgründen im Rohrleitungsbau vermehrt Rohrleitungen aus thermoplastischen Kunststoffen verwendet, im speziellen für den Bau von Rohrleitungsnetzen für die Gas- und Wasserversorgung, sowie zum Fördern von Luft, Abwasser oder auch Chemikalien. Die eingesetzten Rohrleitungen sind meist aus druckfestem Kunststoff. Zur Verbindung solcher Rohrleitungen werden oft aus Effizienzgründen Elektroschweissmuffen verwendet die zwei Heizwendelschweisszonen aufweisen. Je grösser der Leitungsdurchmesser der zu verbindenden Rohrleitungen, desto mehr Aufwand bedarf es zur Verbindung der einzelnen Rohrleitungskomponenten. Da bei grossen Leitungsquerschnitten die Wandstärken dementsprechend dick sind und die Fertigungstoleranzen der Rohrleitungen und der Elektroschweissmuffen bei grossen Durchmessern eine verhältnismässig grosse Spaltenbildung zwischen Rohraussendurchmesser und dem Innendurchmesser der Elektroschweissmuffe beim Zusammenführen der Komponenten ergeben, sind die Vorraussetzungen für eine optimale Verschweissung nicht gegeben. Das heisst, dass bei einem grossen Spalt, zwischen dem Aussendurchmesser des Rohres und dem Innendurchmesser der Elektroschweissmuffe eine lange Schweisszeit erforderlich ist und es zudem einer grossen Menge an elektrische Energie bedarf, nur schon um den Spalt mit dem erwärmten und somit verflüssigten Kunststoff auszufüllen und um eine Verschweissung zu erzielen. Um die eingebrachte elektrische Energie entsprechend gut zu nutzen, ist ein guter Wärmeübergang und eine möglichst grosse Kontaktfläche zu gewährleisten, ansonsten kann keine, den im Rohrleitungsbau notwendigen Anforderungen, entsprechende Schweissverbindung erreicht werden. Weiter besteht bei einem grossen Spalt und einer langen Heizzeit die Gefahr von Drahtaustritt, was zu einer lokalen Überhitzung sowie Rauch- und Geruchsbildung führen kann. Drahtaustritt bedeutet, dass sich durch die Erwärmung des Drahtes, der Draht ausdehnt also länger wird und mehr Platz in Anspruch nimmt. Da der Draht den geringsten Weg des Widerstands wählt, dehnt er sich in die Richtung aus in der er wenig Kunststoff zu verdrängen hat und somit in die Richtung des Innendurchmessers der Elektroschweissmuffe. Da sich nun die Längenausdehnung des Heizdrahtes nicht regelmässig verteilt, sondern sich die Längenausdehnung an einer Stelle kumuliert, erfolgt durch den vergrösserten Platzbedarf des Drahtes oft ein Drahtaustritt.

Die DE 43 32 196 C2 beschreibt eine Schweissmuffe, die ein möglichst gleichmässiges Verschweissen einer Scheissmuffe mit einer Rohrleitung gewährt. Die Schweissmuffe setzt sich aus einem Muffenkörper und einem inneren Muffenteil, welches Rillen zur Aufnahme des Widerstandsdrahtes aufweist, zusammen. Jeweils am Anfang und am Ende jeder Heizzone ist die Steigung der Rille und somit der Wicklungsabstand geringer als im Mittenbereich einer Heizzone. Durch die höhere Wicklungsdichte jeweils am Anfang und am Ende jeder Heizzone, entsteht in den enger gewickelten Bereichen eine grössere Heizleistung, wodurch eine Kompensation der in diesen Bereichen gegebenen grösseren Wärmeverluste erfolgt, so dass im gesamten Bereich der Heizzone eine gleichmässige Schweissverbindung erzielt wird.

Aus der JP 11294673 A ist eine Elektroschweissmuffe bekannt, bei der der Heizdraht nur eine Windung entlang des Innenumfangs der Elektroschweissmuffe aufweist und sich dieser durch seine axiale Ausbreitung über einen breiteren Teil der Elektroschweissmuffe erstreckt und im Zentrum sowie an den beiden Enden der Elektroschweissmuffe jeweils Kältezonen aufweist.

Im oben aufgeführten Stand der Technik lassen die Elektroschweissmuffen keinerlei Verformung zu, d. h. dass die Elektroschweissmuffen nicht einschnürbar bzw. komprimierbar sind und dadurch der Spalt zwischen Elektroschweissmuffe und Rohrleitung bestehen bleibt, was wiederum bei entsprechender Spaltenbreite eine schlechte Wärmeübertragung und somit eine schlechte Verschweissung von Elektroschweissmuffe mit der jeweiligen Rohrleitungskomponenten zur Folge haben kann.

Das Gemeinschaftsgeschmacksmuster 000926357-0001 stellt ein Rohrverbindungsteil dar, der kegelartig ausgebildet ist und keilförmig Einschnitte entlang des Umfangs aufweist um sich an den Gegebenheiten anzupassen. Die Heizwicklung verläuft um die keilförmigen Einschnitte herum.

Der Nachteil eines solchen Rohrverbindungsteils ist, dass durch die keilförmigen Einschnitte die Dichtigkeit einer Rohrverbindung nicht mehr gegeben ist, was für ein Rohrleitungssystem entscheidend ist.

Ausgehend von diesem Stand der Technik ist es Aufgabe der Erfindung, ein Heizwendelschweissfitting anzugeben, welcher verformbar bzw. komprimierbar ist und sich dadurch der Spalt zwischen Rohr / Stumpfschweissfitting und Heizwendelschweissfitting verkleinern bzw. ganz eliminieren lässt, zudem soll das Risiko eines Drahtaustritts vermindert und der Energiebedarf gesenkt werden.

Diese Aufgabe wird erfindungsgemäss dadurch gelöst, dass die Heizdrahtwicklung wellenförmig vorzugsweise sinusförmig verläuft und der Fitting dadurch verformbar ist. Durch den wellenförmigen Verlauf wird dem Heizwendelschweissfitting eine elastische Verformung ermöglicht, die Muffe bzw. der Nippel lassen sich dadurch komprimieren. Auf diese Weise wird ermöglicht, dass sich die Elektroschweissmuffe, die aus montagetechnischen Gründen einen grösseren Innendurchmesser aufweist als das einzuführende Rohr einen Aussendurchmesser hat, durch ein Spannwerkzeug komprimieren lässt. Eine Möglichkeit zur Komprimierung einer Elektroschweissmuffe besteht darin, mit Hilfe eines Spannsets welches um den Umfang der Elektroschweissmuffe gelegt wird, die Muffe zusammen zu ziehen bis der Innendurchmesser der Muffe und der Aussendurchmesser der Rohrleitung aneinander anliegen und anschliessend zu verschweissen. Das Anliegen der beiden Durchmesser ermöglicht einen optimalen Wärmeübergang vom Heizelement bzw. der Heizwendelschweissmuffe oder des Nippels auf die Rohrleitung. So werden die Heizzeiten stark verkürzt und die benötigte Energie kann reduziert werden, was sich am Ende in den Einsparungen der Montagekosten der Rohrleitungen widerspiegelt.

Die Steigung der wellenförmig verlaufenden Heizdrahtwicklung bzw. die Abstände der Windungen zueinander können konstant wie auch variabel verlaufen, sie werden entsprechend auf die Rohrdimension und das Material abgestimmt. Bei einem variabeln Verlauf ist meist am Anfang und am Ende der Heizzone die Steigung und dem zu Folge die Abstände der Windungen geringer, um in den Aussenbereichen des Heizwendelschweissfittings die Heizleistung zu verstärken, wobei auch andere Steigungsverläufe denkbar sind. Die Steigung der Wicklung verläuft in Richtung der Längsachse der angeschlossenen bzw. angeschweissten Rohrleitungsabschnitte. Denkbar sind auch Heizwendelschweissfittings wie Muffen und Nippel die mehr als zwei Rohrleitungsabschnitte zusammenführen, beispielsweise ein Y-förmiges oder T-förmiges Anschlusselement.

Zur Sicherstellung, dass die eingeführten Rohrleitungsabschnitte richtig in der Heizwendelschweissfitting positioniert sind, können die Muffe wie auch der Nippel einen Anschlag auf aufweisen, an den die Rohrleitungsabschnitte herangeschoben werden müssen. Beim Anstehen der Rohrleitungskomponente am Anschlag ist gewährt, dass die Rohrleitungsabschnitte genügend weit in die Muffe bzw. über den Nippel geschoben wurden.

Diese Art von Heizwendelschweissung ist insbesondere für Rohrdurchmesser ab 250 mm geeignet, da gerade bei grossen Durchmessern der Spalt zwischen Fitting und Rohr immer grösser wird und eine Verschweissung dadurch sehr zeitintensiv ist und durch eine solche Ausführungsform der Heizwendelschweissfitting die Schweisszeit reduziert werden kann.

Der Ausschlag bzw. die Amplitude der Heizdrahtwicklung ist ebenfalls individuell und auf die Grösse der Rohrleitung abzustimmen, wobei der Ausschlag den Wert von 10 mm nicht überschreitet. Im Normalfall sind sechs bis zwölf Zyklen des wellenförmig verlaufenden Drahtes entlang einer Windung der Heizdrahtwicklung vorgesehen, die Anzahl der Zyklen ist ebenfalls Rohrdurchmesserabhängig.

Die Amplitude bzw. der Ausschlag sowie die Anzahl und Länge der Zyklen bleiben während des Verlaufs jeder Wicklung entlang des Umfangs konstant.

Eine Möglichkeit der Gestaltung der wellenförmig verlaufenden Wicklung ist eine stetig verlaufende bzw. kurvenförmige Heizdrahtwicklung herzustellen, das heisst, die Richtungswechsel des Drahtes werden durch Bögen erzeugt.

Alternativ kann die Heizdrahtwicklung zickzackartig bzw. unstetig entlang des Durchmessers aufgewunden werden, bei dieser Variante fallen die Richtungswechsel des Drahtes abrupt aus und werden jeweils an einem Punkt in die andere Richtung umgelenkt.

In der Regel werden solche Heizdrahtwicklungen in Elektroschweissmuffen eingearbeitet und sind meist sehr nahe am Rande der Elektroscheissmuffe des Innendurchmessers in den Kunststoff eingebracht, damit ist die Wandstärke der Elektroschweissmuffe zwischen der Heizdrahtwicklung und der Rohrleitungskomponente gering, so kann ein guter Wärmefluss auf die Rohrleitungskomponente erzielt werden.

Die Erfindung zeichnet sich allerdings zusätzlich dadurch aus, dass die Heizdrahtwicklung auch am Aussendurchmesser eines Nippels angebracht werden kann und dadurch Rohrleitungsabschnitte auch über ihren Innendurchmesser aufgenommen werden können.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: ein Längsschnitt einer Elektroschweissmuffe mit zwei unterschiedlichen wellenförmig verlaufenden Heizdrahtwicklungen,
- Fig. 2: jeweils einen Zyklus der wellenförmig verlaufenden Heizdrahtwicklung die stetig bzw. unstetig verläuft und
- Fig. 3: eine wellenförmig verlaufenden Heizdrahtwicklungen am Aussendurchmesser eines Nippels.

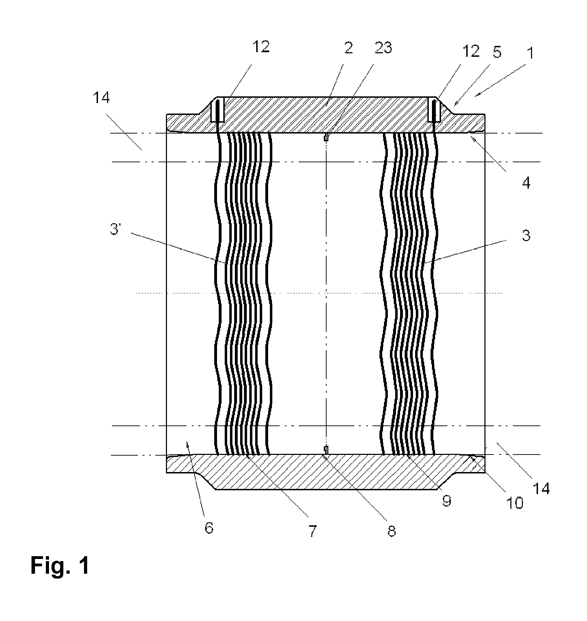

In Fig. 1 ist eine Heizwendelschweissfitting 1 zur Verbindung von Kunststoffrohrleitungskomponenten in einem Längsschnitt dargestellt. Der Heizwendelschweissfitting 1 beinhaltet eine Muffe 2 die aus einem thermoplastischen, schweissbaren Kunststoff hergestellt ist. In den Innendurchmesser der Muffe 2 wird jeweils beidseitig je ein Rohrleitungsabschnitt 14 eingeführt, um die Rohrleitungsabschnitte 14 anschliessend dicht mit dem Heizwendelschweissfitting 1 zu verschweissen. Die Längsachsen der beiden zusammengefügten Rohrleitungsabschnitte 14 sowie die Längsachse des Heizwendelschweissfittings 1 sind zueinander fluchtend. Denkbar sind allerdings auch Heizwendelschweissfittings 1 bei denen die Anschlussstutzen unter bestimmten Winkel zueinander angeordnet sind, beispielsweise 60°, 90°, 120° usw.. Eine weitere Ausführungsform ist eine Muffe mit beidseitig unterschiedlichen Innendurchmessern, was ein Zusammenfügen von zwei unterschiedlichen Rohrleitungsquerschnitten ermöglicht. Eine Kombination der beiden Ausführungsformen ist ebenso denkbar. Weiter sind auch Heizwendelschweissfittings herstellbar die mehr als zwei Anschlussöffnungen aufweisen, beispielsweise Y-förmige oder T-förmige Heizwendelschweissfittings.

Der Heizwendelschweissfitting 1 ist entlang der Längsachse in unterschiedliche Ringförmige Zonen eingeteilt. Die Kaltzone 6 ist an der einen Aussenseite des Heizwendelschweissfittings 1 angeordnet, auf die die Schweisszone 7 folgt, in der der Heizdraht der wellenförmig verlaufenden Wicklung 3' verläuft. In der Mitte des Fittings 1 befindet sich die Kaltzone 8 die zwischen den beiden Wicklungen 3, 3' angeordnet ist. Worauf die Schweisszone 9 und darauf eine abschliessende Kaltzone 10 folgt.

Eine solche Aufteilung in die unterschiedlichen Zonen verursacht eine optimale Druckverteilung des Heizwendelschweissfittings 1 während des Schweissvorgangs auf die Rohrleitungen. Beim Erwärmen des Heizwendelschweissfittings 1 nimmt das Volumen der schmelzendes Kunststoffes der Muffe 2 und der Rohrleitung im Bereich der Schweisszonen 7, 9 zu und fliesst in den Bereich der Kaltzonen 6, 8 10 wo er dann erstarrt und dadurch den nach fliessenden Kunststoff staut und so eine Druckzunahme in der Schweisszone 7, 9 verursacht.

Die eingeführten Rohrleitungsabschnitt 14 können gegeneinander bis in die Mitte des Heizwendelschweissfitting 1 zusammengeschoben werden. Es besteht auch die Möglichkeit in der Mitte des Heizwendelschweissfittings 1 Noppen vorzusehen der als Anschlag 23 für die Rohrleitungsabschnitte 14 dient. So wird gewährleistet, dass beide Rohrleitungsabschnitte 14 genug tief in den Heizwendelschweissfitting 1 eingeführt wurden.

Die Muffe 2 weist am Aussenumfang jeweils an beiden Enden eine Schräge 5 zur Reduzierung des Aussendurchmessers auf, wodurch die Elastizität erhöht und das Einschieben der entsprechenden Rohrleitung vereinfacht wird.

An den beiden Anschlussöffnungen sind jeweils Phasen 4 zum erleichtern Einführen der Rohrleitungsabschnitte 14 angebracht.

Nahe des Innendurchmesser des Heizwendelschweissfittings 1 sind Heizdrähte zu zwei Wicklungen 3, 3' aufgewunden, die zur Erwärmung des Kunststoffs dienen und somit die Verschweissung des Heizwendelschweissfittings 1 und den Rohrleitungsabschnitten 14 ermöglichen. Die Heizdrähte wurden in die Muffe eingegossen, eingepflügt, eingelegt oder durch ein anderes Verfahren in die Muffe 2 eingebracht.

Im Normalfall sind die Heizdrahtwicklungen 3, 3' in einer Elektroschweissmuffe bzw. Nippels stetig bzw. kurvenförmig verlaufend 3' oder unstetig bzw. zickzackartig 3 verlaufend, wobei eine Kombination wie in Fig. 1 abgebildet auch ausführbar ist.

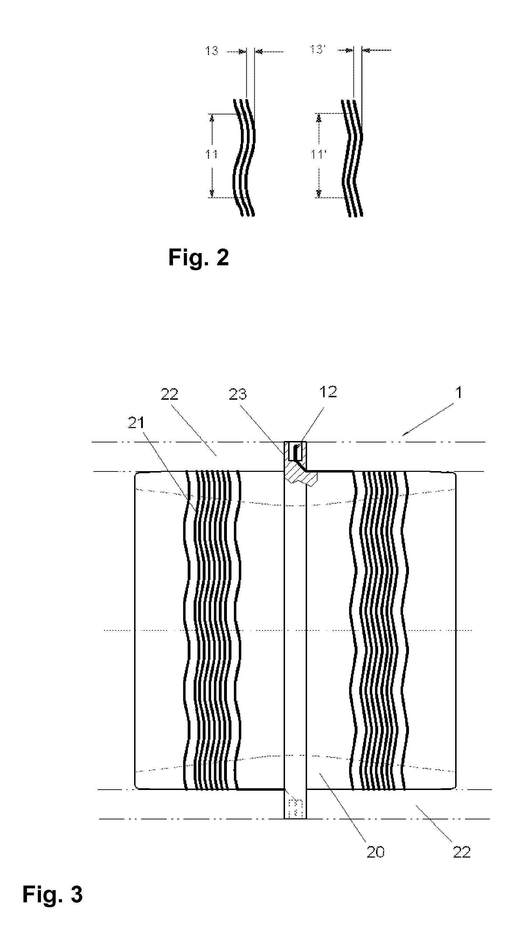

Die Heizdrähte sind mit geringem Abstand zum Innendurchmesser der Muffe 2 in wellenförmig bzw. wellenförmig verlaufenden Linien 3, 3' aufgewunden. Ein Zyklus 11 11' des wellenförmig verlaufenden Drahtes der in Fig. 2 dargestellt ist wiederholt sich periodisch entlang des spiralförmigen Heizdrahtes 3 3'. Die Steigung des Heizdrahtes ist beliebig, kann sowohl konstant wie auch variabel verlaufen, dass beispielsweise während einer Wicklung die Steigung zuerst gering ist und dann zunimmt und gegen Ende wieder abnimmt.

Der Ausschlag 13, 13' bzw. die Amplitude der Wicklung ist ebenso beliebig wählbar und wird meist den Anwendung sowie dem Durchmesser angepasst, wobei ein Maximalwert von 10 mm nicht überschritten werden sollte. Die Anzahl der Zyklen 11, 11' der wellenförmig verlaufenden Wicklung pro Windung beläuft sich in den meisten Fällen zwischen sechs und zwölf Zyklen 11, 11', wobei das vom Durchmesser des Heizwendelschweissfittings 1 bzw. des Durchmessers des Rohrleitungsabschnitts 14 abhängt.

Dadurch dass die Heizdrähte wellenförmig im Heizwendelschweissfitting1 angebracht sind, macht das den Heizwendelschweissfitting 1 verformbar, das heisst es besteht die Möglichkeit den Heizwendelschweissfitting 1 zusammen zu ziehen und auf den Aussendurchmesser der Rohrleitungskomponente zu spannen. Durch beispielsweise ein separates Spannwerkzeug oder Spannset welches um den Heizwendelschweissfitting 1 gelegt und damit auf den Rohrleitungsabschnitt 14 gespannt wird, so dass der Spalt zwischen Heizwendelschweissfitting 1 und Rohrleitungsabschnitt 14 eliminiert wird. Wodurch optimale Bedingungen zur Verschweissung der Komponenten geschaffen werden. Ein weiterer Vorteil mit dieser Art von Heizdrahtwicklung 3, 3' besteht darin, dass sich die Längenausdehnung des Heizdrahts auf die einzelnen Zyklen 11, 11' verteilt und nicht wie bei gerade gewundenen Wicklungen sich die Längenausdehnung an der Stelle ansammelt an der der geringste Widerstand herrscht, wodurch die gesamte Längung des Drahtes sich auf eine Stelle konzentriert und dadurch der Heizdraht durch die Aussenschicht des Innendurchmessers der Muffe 2 tritt, wodurch ein unerwünschter Drahtaustritt zustande kommt. Durch die wellenförmige Anordnung verteilt sich die Längung auf die einzelnen Zyklen 11, 11' und dadurch wird der Heizdraht an keiner Stelle so stark längt, dass er aus dem Kunststoff hervortritt.

Die wellenförmige vorzugsweise sinusförmige Heizdrahtwicklung 3, 3' kann sowohl mit Rundungen also stetig 3' wie auch mit einem eckig, zickzackartig also unstetig 3 verlegten Heizdraht erzeugt werden. Das Anschliessen der Heizdrahtwicklung 3, 3' an eine elektrische Spannung erfolgt über die Kontakte 12.

Fig. 3 zeigt Heizdrahtwicklungen 21 die sich an einem Aussendurchmesser eines Nippels 20 befinden. Bei einer solchen Ausführungsform wird der Rohrleitungsabschnitt 22 auf den Nippel 20 geschoben und anschliessend verschweisst. Dadurch dass die Heizdrahtwicklung 21 wellenförmig verläuft, lässt sich der Nippel 20, um in die Rohrleitungsabschnitte 22 eingeführt zu werden, komprimieren und weitet sich im eingebauten Zustand wieder. Der Aussendurchmesser des Nippels 20 presst sich folglich an den Innendurchmesser der Rohrleitungsabschnitte 22, was eine optimale Voraussetzung für die Wärmeübertragung darstellt.

Auch die Nippel sind in Ausführungsformen herstellbar bei denen mehr als zwei Rohleitungsabschnitte angeschlossen werden können, wie beispielsweise Y-förmige oder T-förmige Nippel. Weiter sind auch hier Anschlüsse unter Winkeln denkbar, z. B. 45°, 60°, 120° usw. sowie auch verschiedene Rohrdurchmesser auf denselben Nippel adaptierbar sind, in dem die einzelnen Abgänge des Nippels unterschiedliche Durchmesser aufweisen.

| | |
|---|---|
| 1 | Heizwendelschweissfitting |
| 2 | Muffe |
| 3 | Heizdrahtwicklung zickzackartig |
| 3' | Heizdrahtwicklung kurvenförmig |
| 4 | Phase |
| 5 | Schräge |
| 6 | Kaltzone |
| 7 | Schweisszone |
| 8 | Kaltzone |
| 9 | Schweisszone |
| 10 | Kaltzone |
| 11 | Zyklus kurvenförmig |
| 11' | Zyklus zickzackartig |
| 12 | Kontakt |
| 13 | Ausschlag kurvenförmig |
| 13' | Ausschlag zickzackartig |
| 14 | Rohrleitungsabschnitt |
| | |
| 20 | Elektroschweissnippel |
| 21 | Wellenwicklung am Aussendurchmesser |
| 22 | Rohrleitungsabschnitt |
| 23 | Anschlag |

## Patentansprüche

1. Heizwendelschweissfitting (1) mit einem zylinderförmigen Kupplungskörper zum Verschweissen von Rohrleitungen aus thermoplastischen oder anderen schweissbaren Kunststoffen, enthaltend mindestens zwei Heizdrahtwicklungen (3, 3') mit jeweils mehreren Windungen die einen beliebigen Abstand zueinander aufweisen sowie Kontakte zur Zuführung des elektrischen Stroms, **dadurch gekennzeichnet, dass** die Heizdrahtwicklung (3, 3') wellenförmig vorzugsweise sinusförmig verläuft und die Kupplung dadurch verformbar ist.

2. Heizwendelschweissfitting nach Anspruch 1, **dadurch gekennzeichnet, dass** der Heizwendelschweissfitting (1) einem Anschlag (23) zur Positionskontrolle der Rohrleitungsabschnitte (14, 22) aufweist.

3. Heizwendelschweissfitting (1) nach einem der Ansprüche 1 oder 2, **dadurch gekennzeichnet, dass** der Heizwendelschweissfitting (1) für Rohrdurchmesser ab 250 mm ist.

4. Heizwendelschweissfitting (1) nach Anspruch 1, **dadurch gekennzeichnet, dass** der Ausschlag (13, 13') der Heizdrahtwicklung (3, 3') nicht grösser als 10 mm ist.

5. Heizwendelschweissfitting (1) nach einem der Ansprüche 1 oder 4, **dadurch gekennzeichnet, dass** die Abstände der Windungen bzw. die Steigung der Heizdrahtwicklung (3, 3') konstant verläuft.

6. Heizwendelschweissfitting (1) nach einem der Ansprüche 1 oder 4, **dadurch gekennzeichnet, dass** die Abstände der Windungen bzw. die Steigung der Heizdrahtwicklung (3, 3') während einer Wicklung variabel verläuft.

7. Heizwendelschweissfitting (1) nach einem der Ansprüche 1 bis 6, **dadurch gekennzeichnet, dass** entlang einer Windung der Heizdrahtwicklung (3, 3') sechs bis zwölf Zyklen (11, 11') angeordnet sind.

8. Heizwendelschweissfitting (1) nach einem der Ansprüche 1 bis 7, **dadurch gekennzeichnet, dass** die wellenförmig verlaufende Heizdrahtwicklung (3') stetig bzw. kurvenförmig verläuft.

9. Heizwendelschweissfitting (1) nach einem der Ansprüche 1 bis 8, **dadurch gekennzeichnet, dass** die wellenförmig verlaufende Heizdrahtwicklung (3) unstetig bzw. zickzackartig verläuft.

10. Heizwendelschweissfitting (1) nach einem der Ansprüche 1 bis 9, **dadurch gekennzeichnet, dass** die Heizdrahtwicklung (3, 3') am Innendurchmesser einer Elektroschweissmuffe (2) angeordnet ist.

11. Heizwendelschweissfitting (1) nach Anspruch 10, **dadurch gekennzeichnet, dass** Elektroschweissmuffe (2) dünnwandig ausgebildet ist.

12. Heizwendelschweissfitting (1) nach einem der Ansprüche 1 bis 11, **dadurch gekennzeichnet, dass** die Heizdrahtwicklung (21) am Aussendurchmesser eines Nippels (20) angeordnet ist.
